# EUROPÄISCHE PATENTSCHRIFT

(11) **EP 2 603 428 B1**
(45) Veröffentlichungstag und Bekanntmachung des Hinweises auf die Patenterteilung: **22.07.2015**
(21) Anmeldenummer: 11720103.8
(22) Anmeldetag: 17.05.2011
(51) Int. Cl.: B64D 13/02, F16K 39/02, F16K 1/22

(54) **VENTIL ZUR STEUERUNG DES INNENDRUCKS IN EINER KABINE EINES LUFTFAHRZEUGS**
VALVE FOR CONTROLLING THE INTERNAL PRESSURE IN A CABIN OF AN AIRCRAFT
VANNE DESTINÉE À LA COMMANDE DE LA PRESSION INTÉRIEURE DANS UNE CABINE D'UN AÉRONEF

(30) Priorität: 09.08.2010 DE 102010033827
(43) Veröffentlichungstag der Anmeldung: 19.06.2013
(60) Teilanmeldung: 14190707.1
(73) Patentinhaber: Nord-Micro AG & Co. OHG, 60388 Frankfurt (DE)
(72) Erfinder: STEINERT, Martin, 63500 Seligenstadt (DE); SPRINGER, Axel, 63500 Seligenstadt (DE)
(74) Vertreter: Flügel Preissner Kastel Schober
(86) Internationale Anmeldenummer: PCT/EP2011/058006
(87) Internationale Veröffentlichungsnummer: WO 2012/019796

(56) Entgegenhaltungen:
- WO-A1-2005/023649
- US-A1- 2007 089 746
- US-A1- 2010 006 788
- US-A1- 2010 096 503
- US-A1- 2010 320 318
- US-B1- 6 273 136

## Beschreibung

Die vorliegende Erfindung betrifft ein Ventil zur Steuerung des Innendrucks in einer Kabine eines Luftfahrzeugs, mit einer ersten Klappe und einer zweiten Klappe, wobei die Klappen einen den Druck verändernden Fluidstrom zwischen der Umgebung und der Kabine durch eine Öffnung eines Begrenzungselements der Kabine steuern.

Derartige Ventile werden zur Steuerung des Drucks innerhalb einer Flugzeugkabine oder einer Druckkammer verwendet. Zur Steuerung des Drucks in einer Flugzeugkabine ist das Ventil in einer Öffnung des Flugzeugrumpfes eingebracht. Je nach Stellung des Ventils kann Luft ein- oder ausströmen. Somit kann mit Hilfe des Ventils der Druck in der Kabine erhöht oder abgebaut werden. Zudem kann die in der Flugzeugkabine befindliche verbrauchte Luft über das Ventil abgelassen werden.

Aus der DE 10 2008 040 184 A1 geht ein Ventil hervor, das zwei verstellbare Klappen aufweist. Je nach Stellung der Klappen strömt entweder Luft aus der Flugzeugkabine heraus oder hinein. In der Einströmstellung der Klappen wird Luft in die Flugzeugkabine hineingelenkt. Nachteilig hierbei ist jedoch, dass hinter der Klappe Luftverwirbelungen entstehen, die einen Teil der einströmenden Luft wieder aus dem Inneren der Flugzeugkabine saugen

Aus der US WO 2005/023648 A1 ist ein Auslassventil für ein Flugzeug bekannt, das zwei in einem Ventilrahmen angeordnete Klappen aufweist. An den Klappen sind aufgeraute Oberflächenbereiche vorgesehn, die eine Verwirbelung der Luftströmung bewirken sollen.

In der US 6 273 136 B1 und der US 2010/0096503 A1 sind Luftauslassventile beschrieben, die zwei Klappen aufweisen, die verstellbar in einem Ventilrahmen angeordnet sind.

Die Aufgabe der vorliegenden Erfindung besteht darin, ein Ventil der eingangs genannten Art derart weiterzubilden, dass die Einströmmenge des Fluids in die Kabine erhöht wird.

Zur Lösung dieser Aufgabe wird bei einem Ventil der eingangs genannten Art vorgeschlagen, dass eine Verschlusseinrichtung vorgesehen ist, die in der Einströmstellung der Klappen einen Bereich zwischen der ersten Klappe und der zweiten Klappe verschließt, wobei die Verschlusseinrichtung als ansteuerbare Verschlussklappe ausgebildet ist.

Das erfindungsgemäße Ventil zeichnet sich dadurch aus, dass die Menge der in die Kabine einströmenden Luft erhöht wird. Durch die Verschlussklappe kann ein Spalt bzw. Bereich zwischen der ersten Klappe und der zweiten Klappe verringert oder verschlossen werden. Hierdurch wird ein Ausströmen der Luft zwischen dem Spalt der ersten Klappe und der zweiten Klappe unterbunden. Somit kann beispielsweise bei einem Ausfall der Klimaanlage die Zufuhr von Frischluft in die Flugzeugkabine sichergestellt werden.

In einer vorteilhaften Ausgestaltung ist die Verschlussklappe schwenkbeweglich an einer der Klappen angeordnet. Dadurch kann die Verschlussklappe während des Einströmvorgangs in Richtung der anderen Klappe geschwenkt werden, um so den Spalt bzw. Bereich zwischen den beiden Klappen zu verringern oder zu verschließen.

Die Verschlussklappe ist vorteilhaft an der ersten Klappe angeordnet. Die Verschlussklappe kann mittels einer Kinematik mit der ersten Klappe verbunden werden, um so die Stellung der Verschlussklappe simultan mit der ersten Klappe zu steuern.

Bei einer weiteren vorteilhaften Ausgestaltung ist die Verschlussklappe mit einem ansteuerbaren Stellglied verbunden. Das ansteuerbare Stellglied ermöglicht eine exakte Positionierung der Verschlussklappe in Relation zu den beiden Klappen. Dadurch ist es möglich, dass die Verschlussklappe beim Einströmen der Luft den Spalt bzw. Bereich zwischen der ersten und der zweiten Klappe verschließt.

Bei einer weiteren Ausführungsform ist die Verschlusseinrichtung als Verschlussklappe ausgebildet, die schwenkbeweglich an einem Rahmen des Ventils gelagert ist. Dadurch ist es möglich, einen Spalt bzw. Bereich zwischen der ersten Klappe und der zweiten Klappe zu verringern oder zu verschließen. Demgemäß wird ein Ausströmen der Luft zwischen den beiden Klappen unterbunden.

Vorteilhaft liegt die Verschlussklappe in der Einströmstellung der Klappen an den in den Flugzeuginnenraum ragenden Oberkanten der Klappen an. Dadurch wird ein sicheres Verschließen des Spaltes bzw. Bereiches zwischen der ersten Klappe und der zweiten Klappe gewährleistet.

Vorteilhafterweise ist die Verschlussklappe über einen Gelenkmechanismus mit der zweiten Klappe und dem Rahmen verbunden. Hierdurch wird bei einem Verschwenken der zweiten Klappe die Verschlussklappe ebenfalls verschwenkt. Dadurch ist eine zusätzliche Stelleinrichtung zum Verschwenken der Verschlussklappe nicht mehr notwendig. Demgemäß entfallen teure, wartungsintensive und störanfällige Stelleinrichtungen, so dass die Kosten reduziert und die Standzeit und Ausfallsicherheit des Ventils erhöht werden. Vorteilhafterweise umfasst der Gelenkmechanismus wenigstens eine Stange und Koppelabschnitte, die an der zweiten Klappe und/oder dem Rahmen angeordnet sind.

Weiterhin vorteilhaft ist die Verschlussklappe über den Gelenkmechanismus gegenläufig oder gleichläufig zu den Klappen verstellbar. Bei einem Verschwenken der Klappen in die Einströmstellung verschwenken zunächst die Klappen und die Verschlussklappe in die gleiche Richtung. Ab einem gewissen Verschwenkwinkel der zweiten Klappe verschwenkt die Verschlussklappe auf Grund des Gelenkmechanismus gegenläufig zu den beiden Klappen.

Die Verschlussklappe weist vorteilhafterweise an ihren seitlichen Längsrändern gebogene Randbereiche auf. Dabei weist der Endbereich der Verschlussklappe eine an die erste Klappe angepasste Kontur auf.

In einer weiteren vorteilhaften Ausgestaltung liegt wenigstens einer der Randbereiche in der Einströmstellung der Klappe an dem Rahmen an. Durch diese Maßnahme wird in der Schließstellung der Verschlussklappe eine gute Dichtwirkung erzielt.

In einer weiteren vorteilhaften Ausgestaltung ist mindestens eine der Klappen bezüglich der Öffnung verschiebbar gelagert. Hierdurch ist es möglich, die erste Klappe weiter in die Grenzschicht der Flugzeugumströmung einzufahren, um so die Anströmfläche der ersten Klappe zu erhöhen, wodurch die Lufteinströmmenge in die Flugzeugkabine erhöht wird.

Mindestens einer der Klappen ist vorteilhaft ein Stellglied zugeordnet, mit dem die mindestens eine Klappe verschiebbar ist.

In einer weiteren vorteilhaften Ausgestaltung weist die erste Klappe einen abgewinkelten Bereich auf. Dadurch weist die erste Klappe eine strömungstechnisch vorteilhafte Formgebung auf, so dass eine größere Luftmenge in die Kabine einströmen kann.

Weiterhin vorteilhaft ist mindestens eine der Klappen längenveränderlich ausgebildet. Die längenveränderliche Klappe kann dazu verwendet werden, um ein Ausströmen der zuvor eingeströmten Luft zu reduzieren oder zu verhindern. Ferner kann mittels der längenveränderlichen Klappe die Anströmfläche vergrößert werden.

Bei einer weiteren vorteilhaften Ausgestaltung weist die erste Klappe einen Spoiler auf, der bezüglich der ersten Klappe mittels eines Stellglieds verstellbar ist. Der Spoiler kann in die Grenzschicht der Flugzeugumströmung eingefahren werden, so dass die Anströmfläche der ersten Klappe vergrößert wird. Folglich wird die Menge der in die Kabine einströmenden Luft vergrößert.

In einer weiteren vorteilhaften Ausgestaltung ist die erste Klappe an einer Schwenkeinrichtung angeordnet, die schwenkbeweglich in dem Rahmen des Ventils gelagert ist.

Vorteilhafterweise weist die Schwenkeinrichtung zwei an dem Rahmen schwenkbeweglich gelagerte Tragarme auf. Hierdurch wird eine kostengünstige Schwenkeinrichtung zur Verfügung gestellt.

In einer weiteren vorteilhaften Ausgestaltung ist eine Stelleinrichtung vorgesehen, mit der die Klappen und/oder Schwenkeinrichtung in eine Ausströmund eine Einströmstellung verstellbar sind. Durch die Stelleinrichtung kann das erfindungsgemäße Ventil sowohl als Einströmventil auch als Ausströmventil fungieren. In der Ausströmstellung kann die in der Flugzeugkabine befindliche Luft abgelassen werden. In der Einströmstellung kann Stauluft/Frischluft der Flugzeugkabine zugeführt werden. Folglich übernimmt das erfindungsgemäße Ventil die Funktion von bisher zwei separaten Systemen. Dadurch kann Gewicht eingespart und die Kosten reduziert werden. Vorteilhaft sind über die Stelleinrichtung die Klappen und/oder Schwenkeinrichtung gegenläufig und/oder gleichläufig verstellbar. Die gegenläufige Verstellbarkeit ermöglicht, dass die erste Klappe und/oder die Schwenkeinrichtung in die Einströmstellung schwenkt, während die zweite Klappe gegenläufig zu der ersten Klappe und/oder der Schwenkeinrichtung schwenkt.

Nachfolgend wird die Erfindung anhand von Ausführungsbeispielen näher beschrieben, die in der Zeichnung schematisch dargestellt sind. Hierbei zeigen:
- Fig. 1: einen Querschnitt einer ersten Ausführungsform des erfindungsgemäßen Ventils;
- Fig. 2: einen Querschnitt eines Beispiels eines Ventils;
- Fig. 3: einen Querschnitt einer zweiten Ausführungsform des erfindungsgemäßen Ventils;
- Fig. 4: einen Querschnitt einer dritten Ausführungsform des erfindungsgemäßen Ventils;
- Fig. 5: einen Querschnitt eines weiteren Beispiels eines Ventils;
- Fig. 6: einen Querschnitt einer vierten Ausführungsform des erfindungsgemäßen Ventils und
- Fig. 7: eine perspektivische Ansicht einer Verschlussklappe des erfindungsgemäßen Ventils gemäß der vierten Ausführungsform.

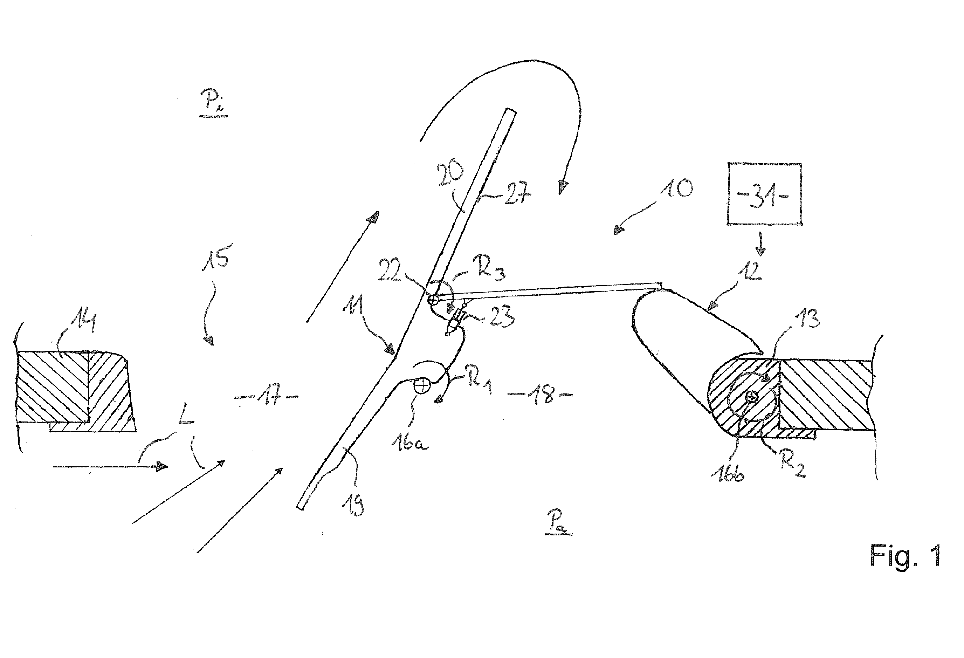

Fig. 1 zeigt ein Ventil 10 gemäß einer ersten Ausführungsform zur Steuerung eines Innendrucks pᵢ in einer Kabine eines Flugzeugs. Das Ventil 10 weist eine erste Klappe 11 (ground gate) und eine zweite Klappe 12 (control gate) auf. Beide Klappen 11, 12 sind in einem Rahmen 13 mittels Lagern 16a, 16b beweglich angeordnet. Der Rahmen 13 des Ventils 10 ist in einem Begrenzungselement 14 des Flugzeuges, vorliegend im Flugzeugrumpf, eingesetzt. Durch den Rahmen (13) wird eine Öffnung (15) begrenzt, über die Luft in die Kabine ein- und ausströmen kann.

Beide Klappen 11, 12 sind über eine schematisch dargestellte Stelleinrichtung 31 verbunden. Hierdurch können die Klappen 11, 12 um die Lager 16a, 16b geschwenkt werden.

Die erste Klappe 11 ist exzentrisch gelagert und weist einen ersten Abschnitt 19 und einen zweiten Abschnitt 20 auf. Der erste Abschnitt 19 ist gegenüber dem zweiten Abschnitt 20 abgewinkelt, wodurch ein verbesserter Lufteinlass erzielt wird. Der Querschnitt des ersten Abschnittes 19 verjüngt sich in Richtung des freien Endes.

An einer Rückseite 27 der ersten Klappe 11 ist eine Verschlusseinrichtung 21 angeordnet. Die Verschlusseinrichtung 21 ist im vorliegenden Ausführungsbeispiel als Verschlussklappe ausgebildet, die über ein Lager 22 schwenkbar mit der ersten Klappe 11 gekoppelt ist. Die Verschlusseinrichtung 21 ist mit einem schematisch dargestellten ersten Stellglied 23 verbunden, mittels dem die Verschlusseinrichtung 21 geschwenkt werden kann.

Zum Einströmen der Luft schwenken die Klappen 11, 12 in die in Fig. 1 gezeigte Einströmstellung. Die erste Klappe 11 schwenkt dabei in Richtung R₁ und die zweite Klappe in Richtung R₂. Hierdurch wird ein Einströmbereich 17 gebildet. Über den Einströmbereich 17 erfolgt ein Einströmen des Luftstroms L. Da sich hinter der ersten Klappe 11 starke Luftverwirbelungen bilden, die den statischen Außendruck absenken, würde ein Teil der eingeströmten Luft wieder durch einen Ausströmbereich 18 herausströmen. Um dies zu verhindern, wird die Verschlusseinrichtung 21 mittels des ersten Stellglieds 23 in Richtung R₃ der zweiten Klappe 12 geschwenkt. Weiterhin wird die zweite Klappe 12 gegenläufig zu der in Fig. 1 gezeigten Bewegungsrichtung R₂ der zweiten Klappe 11 geschwenkt. Dadurch liegt die Verschlusseinrichtung 21 an der zweiten Klappe 12 an und verschließt den Ausströmbereich 18. Somit wird ein Ausströmen der zuvor eingeströmten Luft verhindert. Die gegenläufige Bewegung der beiden Klappen 11, 12 wird durch das schematisch dargestellte Stellglied 31 ermöglicht.

Zum Ausströmen der Luft aus der Flugzeugkabine in die Umgebung schwenken die Klappen 11, 12 in eine nicht dargestellte Ausströmstellung. Hierbei schwenkt die erste Klappe 11 derart in Richtung R₁, dass das freie Ende des ersten Abschnitts 19 in den Ausströmbereich 18 zeigt. Die zweite Klappe 12 schwenkt in Richtung R₂. Zwischen der ersten Klappe 11 und der zweiten Klappe 12 strömt die Luft über den Ausströmbereich 18 in die Umgebung. Die Verschlusseinrichtung 21 liegt während des Ausströmvorgangs an der Rückseite 27 der ersten Klappe 11 an, um so das Ausströmen der Luft nicht zu behindern.

In einer nicht dargestellten Schließstellung des Ventils 10 berühren sich die beiden Klappen 11, 12, wobei das freie Ende des ersten Abschnitts 19 an einem freien Ende der zweiten Klappe 12 anliegt. In der Schließstellung liegt die Verschlusseinrichtung 21 an der Rückseite 27 der ersten Klappe 11 an.

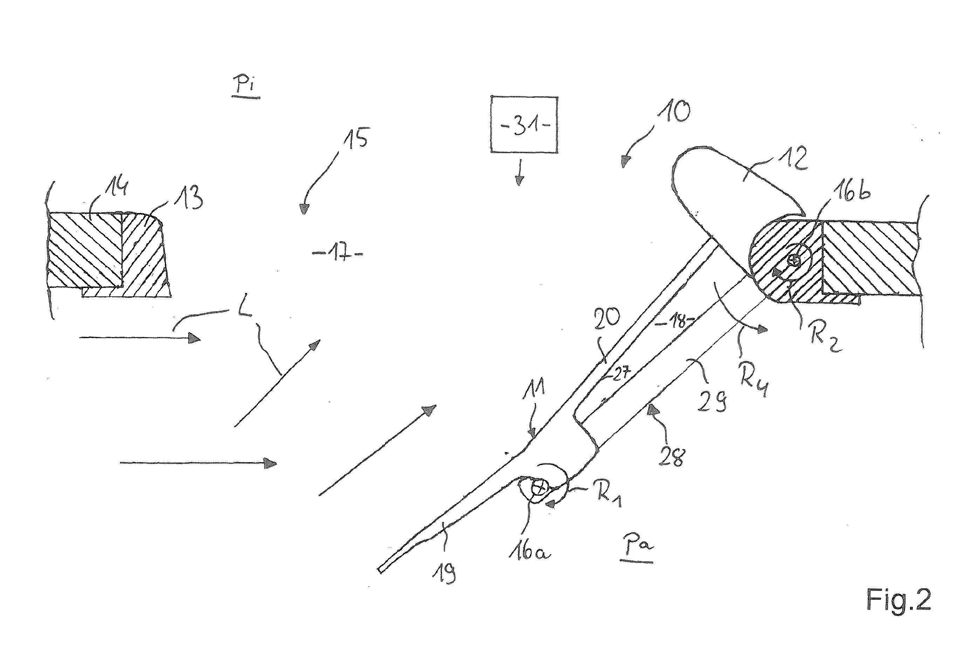

In Fig. 2 ist ein Beispiel des Ventils 10 gezeigt, zu deren Beschreibung die zuvor eingeführten Bezugszeichen für gleiche oder funktionsgleiche Teile verwendet werden. Bei diesem Beispiel ist die erste Klappe 11 mit einer Schwenkeinrichtung 28 verbunden. Die Schwenkeinrichtung 28 weist zwei Tragarme 29 auf, die an dem Lager 16b im Rahmen 13 des Ventils 10 schwenkbar gelagert sind. Am freien Ende der Schwenkeinrichtung 28 ist die erste Klappe 11 schwenkbar an dem Lager 16a angeordnet. Die Schwenkeinrichtung 28 und die Klappen 11, 12 sind mit der schematisch dargestellten Stelleinrichtung 31 verbunden. Hierdurch können die Klappen 11, 12 und die Schwenkeinrichtung 28 um die Lager 16a, 16b geschwenkt werden.

Zum Einströmen der Luft schwenken die Klappen 11, 12 und die Schwenkeinrichtung 28 in die in Fig. 2 gezeigte Stellung. Die erste Klappe 11 schwenkt dabei in Richtung R₁, die zweite Klappe 12 in Richtung R₂ und die Schwenkeinrichtung 28 in Richtung R₄. Dadurch wird der Einströmbereich 17 innerhalb der Öffnung 15 gebildet. Über den Einströmbereich 17 erfolgt ein Einströmen des Luftstroms. Die Schwenkeinrichtung 28, die erste Klappe 11 und die zweite Klappe 12 werden derart geschwenkt, dass die erste Klappe 11 annähernd an der zweiten Klappe 12 anliegt, um so den Ausströmbereich 18 zu verschließen.

Durch die Schwenkeinrichtung 28 kann die erste Klappe 11 weiter in den Luftstrom (L) eingefahren werden, so dass die erste Klappe 11 großflächiger angeströmt wird. Somit wird die Lufteinströmmenge und der Wirkungsgrad erhöht.

Zum Ausströmen der Luft aus der Flugzeugkabine in die Umgebung schwenken die Klappen 11, 12 in eine nicht dargestellte Ausströmstellung. Die Schwenkeinrichtung 28 liegt während des Ausströmvorgangs an dem Rahmen 13 an. Die erste Klappe 11 schwenkt zum Ausströmen der Luft derart in Richtung R₁, dass das freie Ende des ersten Abschnitts 19 in den Ausströmbereich 18 zeigt. Die zweite Klappe 12 schwenkt in Richtung R₂. Zwischen der ersten Klappe 11 und der zweiten Klappe 12 strömt die Luft über den Ausströmbereich 18 in die Umgebung. Die Schwenkeinrichtung 28 liegt während des Ausströmvorgangs an dem Rahmen 13 an.

In einer nicht dargestellten Schließstellung des Ventils 10 berühren sich die beiden Klappen 11, 12, wobei das freie Ende des ersten Abschnitts 19 an einem freien Ende der zweiten Klappe 12 anliegt. In der Schließstellung liegt die Schwenkeinrichtung 28 an dem Rahmen 13 an.

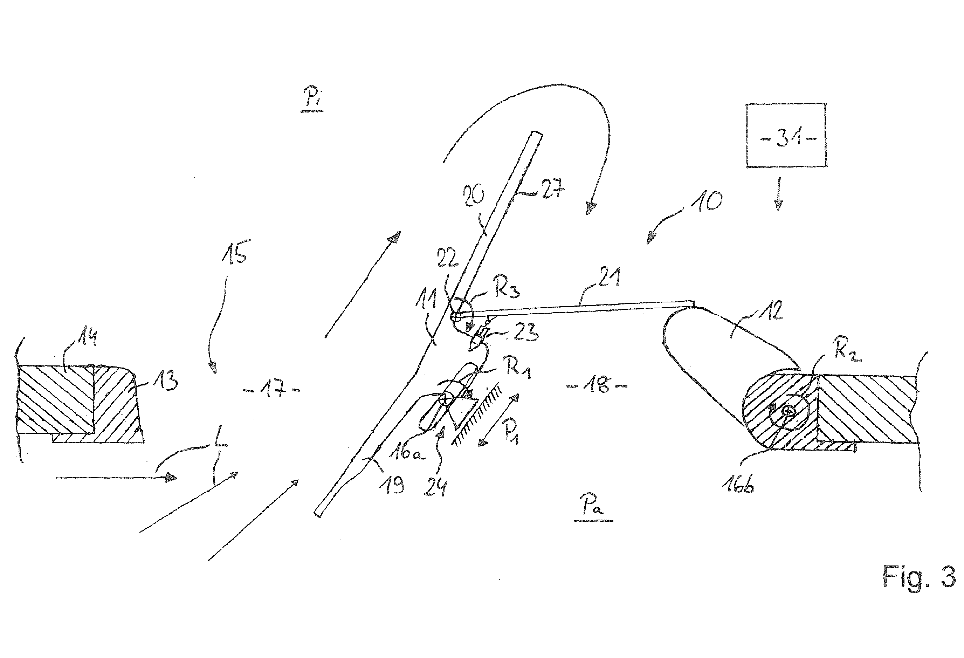

In Fig. 3 ist eine weitere Ausführungsform des Ventils 10 gezeigt, zu deren Beschreibung die zuvor eingeführten Bezugszeichen für gleiche oder funktionsgleiche Teile verwendet werden. Bei dieser Ausführungsform ist die erste Klappe 11 über ein schematisch dargestelltes Lager 24 verschiebbar gelagert. Mittels eines nicht dargestellten Stellglieds kann die erste Klappe 11 in Richtung des Pfeils P₁ verschoben werden. Dadurch kann die erste Klappe 11 in die Grenzschicht der Flugzeugumströmung gefahren werden, so dass die Anströmfläche vergrößert und die Menge an einströmender Luft erhöht wird.

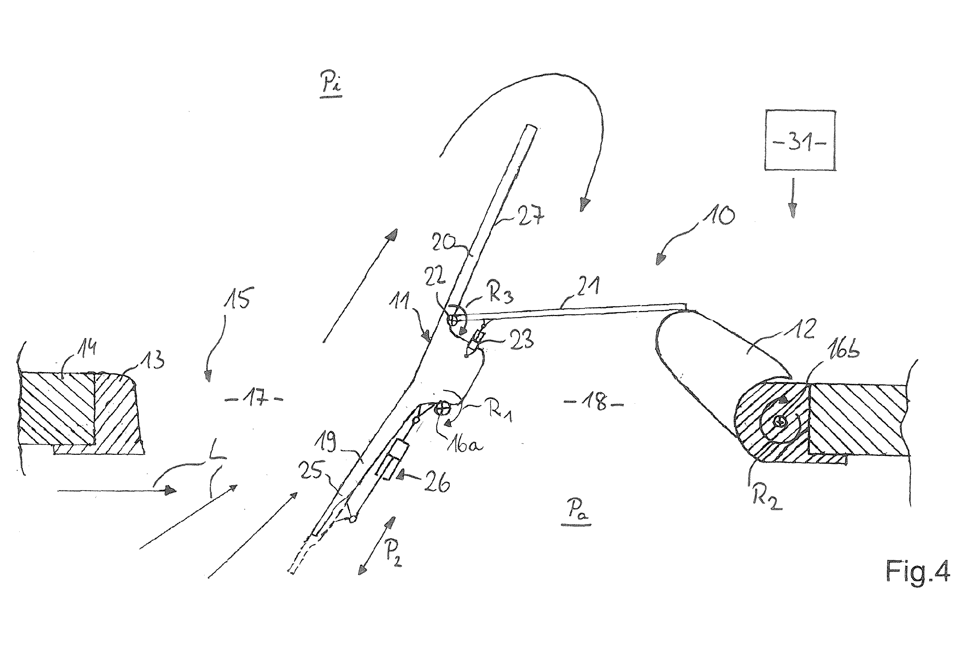

In Fig. 4 ist eine weitere Ausführungsform des Ventils 10 gezeigt, zu deren Beschreibung die zuvor eingeführten Bezugszeichen für gleiche oder funktionsgleiche Teile verwendet werden. Bei dieser Ausführungsform ist an dem ersten Abschnitt 19 der ersten Klappe 11 ein ausfahrbarer Spoiler 25 angeordnet ist. Der Spoiler 25 ist über ein schematisch dargestelltes zweites Stellglied 26 in Richtung des Pfeils P₂ verschiebbar. In Fig. 3 ist der Spoiler 25 im ausgefahrenem Zustand gestrichelt dargestellt. Durch Ausfahren des Spoilers 25 in die Grenzschicht der Flugzeugumströmung wird die Anströmfläche vergrößert. Hierdurch kann eine größere Luftmenge in die Kabine einströmen.

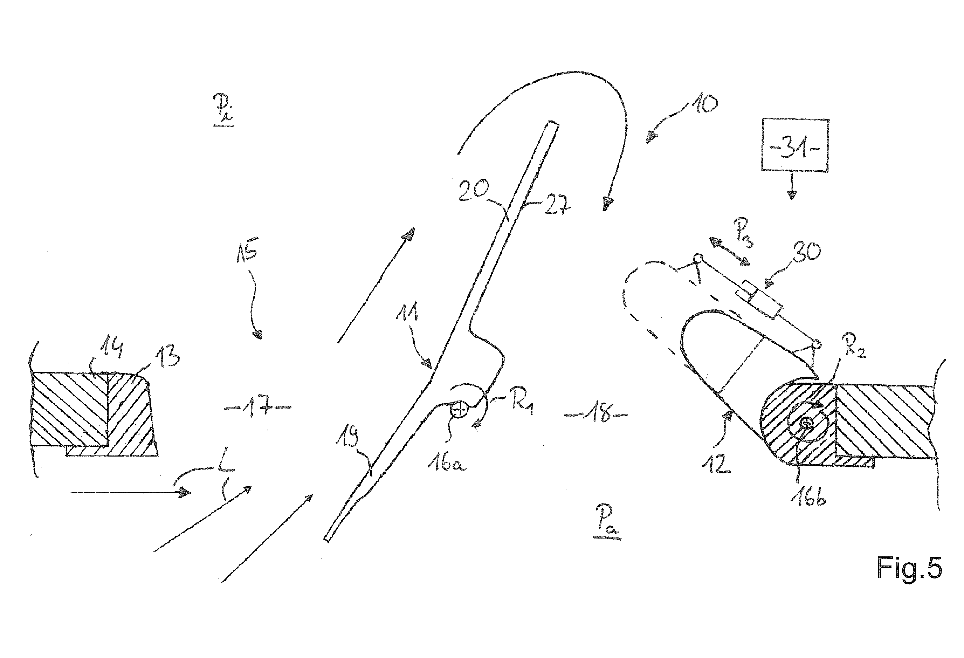

Fig. 5 zeigt ein weiteres Beispiel des Ventils 10, zu deren Beschreibung die zuvor eingeführten Bezugszeichen für gleiche oder funktionsgleiche Teile verwendet werden. Bei diesem Beispiel ist die zweite Klappe 12 längenveränderlich ausgebildet. Die zweite Klappe 12 ist über ein schematisch dargestelltes drittes Stellglied 30 in Richtung des Pfeils P₃ verschiebbar. Hierdurch kann der Ausströmbereich 18 reduziert oder vollständig verschlossen werden, um so ein Ausströmen der eingeströmten Luft zu reduzieren oder zu verhindern.

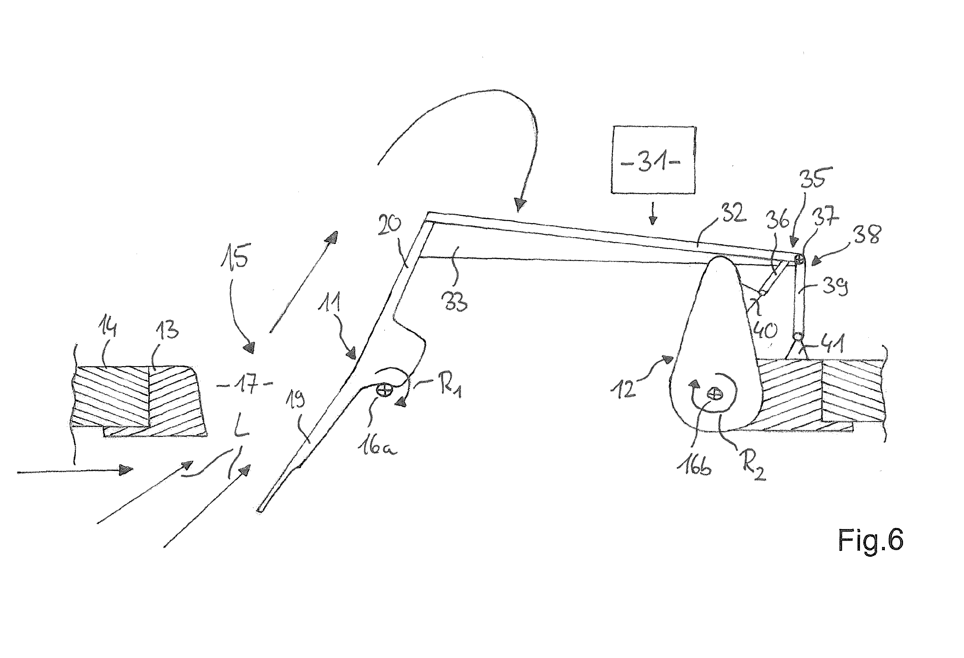

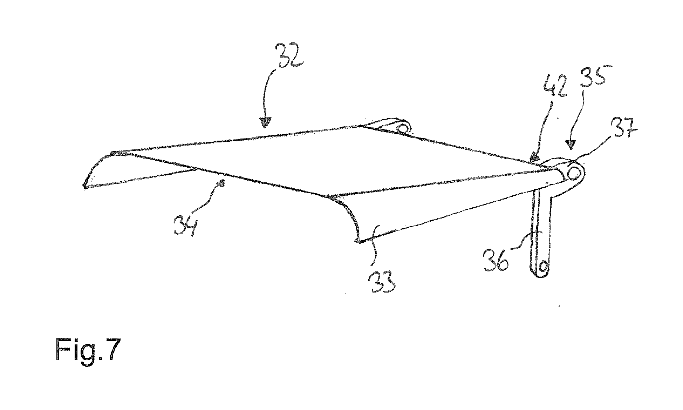

In den Fig. 6 und 7 ist eine weitere Ausführungsform des Ventils dargestellt, zu deren Beschreibung die zuvor eingeführten Bezugszeichen für gleiche oder funktionsgleiche Teile verwendet werden. Das Ventil 10 gemäß dieser Ausführungsform weist als Verschlusseinrichtung 21 eine an dem Rahmen 13 schwenkbeweglich gelagerte Verschlussklappe 32 auf, die in Fig. 6 gezeigt ist.

Wie in Fig. 7 dargestellt ist, weist die Verschlussklappe 32 an ihren Längsrändern gebogene Randbereiche 33 auf, wobei die Randbereiche 33 von einer Stirnseite 34 der Verschlussklappe 32 mit abnehmender Breite nach hinten verlaufen. In der Einströmstellung der Klappen 11, 12 liegen die Randbereiche 33 der Verschlussklappe 32 an dem Rahmen 13 des Ventils 10 an. Des Weiteren weist die Verschlussklappe 32 an ihrer Hinterkante 42 Koppelglieder 35 auf. Die Koppelglieder 35 weisen einen ersten Lagerabschnitt 36 und einen zweiten Lagerabschnitt 37 auf. Der erste Lagerabschnitt 36 ist als starre Stange und der zweite Lagerabschnitt 37 mit einer Bohrung ausgebildet.

Wie in Fig. 6 gezeigt ist, ist die Verschlussklappe 32 über die Koppelglieder 35 mit einem Gelenkmechanismus 38 verbunden, der die Verschlussklappe 32 mit der zweiten Klappe 12 und dem Rahmen 13 schwenkbar verbindet. Hierzu umfasst der Gelenkmechanismus 38 eine Stange 39, einen ersten Koppelbschnitt 40 und einen zweiten Koppelabschnitt 41. Der erste Koppelabschnitt 40 ist an der zweiten Klappe 12 angeordnet und mit dem ersten Lagerabschnitt 36 verbunden. Der zweite Koppelabschnitt 41 ist an dem Rahmen 13 angebracht und über die Stange 39 mit dem zweiten Lagerabschnitt 37 verbunden.

Zum Einströmen der Luft schwenken die Klappen 11, 12 in die in Fig. 6 gezeigte Einströmstellung. Hierbei verschwenkt die erste Klappe 11 in Richtung R₁. Die zweite Klappe 12 und die Verschlussklappe 32 verschwenken in Richtung R₂. Ab einem bestimmten Verschwenkwinkel der zweiten Klappe 12 verschwenkt die Verschlussklappe 32 auf Grund des Gelenkmechanismus 38 jedoch in eine entgegen gesetzte Richtung zu R₂, bis die Verschlussklappe 32 in der in Fig. 6 gezeigten Einströmstellung an den Oberkanten der Klappen 11, 12 anliegt. Somit verschließt die Verschlussklappe 32 einen Bereich zwischen den beiden Klappen 11, 12, wodurch ein Ausströmen der zuvor über den Einströmbereich 17 eingeströmten Luft verhindert wird. Die Bewegung der Klappen 11, 12 und der Verschlussklappe 32 wird durch das schematisch dargestellte Stellglied 31 bewirkt.

Da die Verschlussklappe 32 über den Gelenkmechanismus 38 mit der zweiten Klappe 12 gekoppelt ist, wird kein separates Stellglied zum Verschwenken der Verschlussklappe 32 benötigt.

Es ist auch möglich, die Ausgestaltungen gemäß den Fig. 2 und 3 miteinander zu kombinieren. Des Weiteren können die Ausgestaltungen gemäß den Fig. 2 und 5 mit einem verschiebbaren Lager 24 und/oder einem ausfahrbaren Spoiler 25 versehen werden. Darüber hinaus kann die Ausführungsform gemäß Fig. 5 zusätzlich mit einer Verschlusseinrichtung 21 versehen werden. Ferner kann die Ausführungsform gemäß Fig. 6 mit einem verschiebbaren Lager 24 und/oder einem ausfahrbaren Spoiler 25 und/oder einer Schwenkeinrichtung 28 versehen werden.

Bei der Stelleinrichtung 31 handelt es sich um eine schematisch dargestellte Einrichtung. Jegliche Art an geeigneter Stelleinrichtung kann vorliegend verwendet werden, wie beispielsweise eine über einen Motor angetriebene Kinematik.

Bei den Stellgliedern 23, 26, 30 handelt es sich um schematisch dargestellte Teile. Jegliche Art an geeigneten Stellgliedern kann vorliegend verwendet werden.

Ferner kann vorliegend jegliche Art an geeigneter Schwenkeinrichtung 28 verwendet werden, wie beispielsweise einen Rahmen, der an dem Lager 16b im Rahmen 13 des Ventils 10 schwenkbar gelagert ist.

Das erfindungsgemäße Ventil 10 zeichnet sich dadurch aus, dass die Lufteinströmmenge in die Kabine erhöht wird. So kann beispielsweise bei Ausfall der Klimaanlage die Zufuhr von Frischluft zur Kabine sichergestellt werden, da die einströmende Luft in ausreichender Menge zur Verfügung gestellt wird. Des Weiteren kann in der Ausströmstellung der Klappen 11, 12 Luft aus der Flugzeugkabine abgelassen werden. Folglich kann das erfindungsgemäße Ventil 10 als kombiniertes Einström- und Ausströmventil fungieren.

**Bezugszeichenliste**

| | | | |
|---|---|---|---|
| 10 | Ventil | 37 | zweiter Lagerabschnitt |
| 11 | erste Klappe | 38 | Gelenkmechanismus |
| 12 | zweite Klappe | 39 | Stange |
| 13 | Rahmen | 40 | erster Koppelabschnitt |
| 14 | Begrenzungselement | 41 | zweiter Koppelabschnitt |
| 15 | Öffnung | 42 | Hinterkante |
| 16a | Lager | | |
| 16b | Lager | | |
| 17 | Einströmbereich | L | Luftstrom |
| 18 | Ausströmbereich | R₁ | Bewegungsrichtung |
| 19 | ersten Abschnitt | R₂ | Bewegungsrichtung |
| 20 | zweiter Abschnitt | R₃ | Bewegungsrichtung |
| 21 | Verschlusseinrichtung | R₄ | Bewegungsrichtung |
| 22 | Lager | P₁ | Verschieberichtung |
| 23 | erstes Stellglied | P₂ | Verschieberichtung |
| 24 | verschiebbares Lager | P₃ | Verschieberichtung |
| 25 | Spoiler | Pᵢ | Innendruck |
| 26 | zweites Stellglied | pₐ | Aussendruck |
| 27 | Rückseite | | |
| 28 | Schwenkeinrichtung | | |
| 29 | Tragarm | | |
| 30 | drittes Stellglied | | |
| 31 | Stelleinrichtung | | |
| 32 | Verschlussklappe | | |
| 33 | gebogener Randbereich | | |
| 34 | Stirnseite | | |
| 35 | Koppelglieder | | |
| 36 | erster Lagerabschnitt | | |

## Patentansprüche

1. Ventil (10) zur Steuerung des Innendrucks pᵢ in einer Kabine eines Luftfahrzeugs, mit einer ersten Klappe (11) und einer zweiten Klappe (12), wobei die Klappen (11, 12) einen den Druck verändernden Fluidstrom (L) zwischen der Umgebung und der Kabine durch eine Öffnung (15) des Ventils (10) steuern, wobei eine Verschlusseinrichtung vorgesehen ist, die in der Einströmstellung der Klappen (11,12) einen Bereich zwischen der ersten Klappe (11) und der zweiten Klappe (12) verschließt, **dadurch gekennzeichnet, dass** die Verschlusseinrichtung als ansteuerbare Verschlussklappe (21,32) ausgebildet ist.

2. Ventil nach Anspruch 1, **dadurch gekennzeichnet, dass** die Verschlussklappe (21) schwenkbeweglich an einer der Klappen (11, 12) angeordnet ist.

3. Ventil nach Anspruch 1 oder 2, **dadurch gekennzeichnet, dass** die Verschlussklappe (21) an der ersten Klappe (11) angeordnet ist.

4. Ventil nach einem der Ansprüche 3 bis 5, **dadurch gekennzeichnet, dass** die Verschlussklappe (21) mit einem ansteuerbarem Stellglied (23) verbunden ist.

5. Ventil nach Anspruch 1, **dadurch gekennzeichnet, dass** die Verschlussklappe (32) schwenkbeweglich an einem Rahmen (13) des Ventils (10) gelagert ist.

6. Ventil nach Anspruch 5, **dadurch gekennzeichnet, dass** die Verschlussklappe (32) in der Einströmstellung der Klappen (11, 12) an den in den Flugzeuginnenraum ragenden Oberkanten der Klappen (11, 12) anliegt.

7. Ventil nach einem der Ansprüche 5 oder 6, **dadurch gekennzeichnet, dass** die Verschlussklappe (32) über einen Gelenkmechanismus (38) mit der zweiten Klappe (12) und dem Rahmen (13) verbunden ist.

8. Ventil nach Anspruch 7, **dadurch gekennzeichnet, dass** der Gelenkmechanismus (38) wenigstens eine Stange (39) und Koppelabschnitte (40, 41), die an der zweiten Klappe (12) und/oder dem Rahmen (13) angeordnet sind, umfasst.

9. Ventil nach einem der Ansprüche 7 oder 8, **dadurch gekennzeichnet, dass** die Verschlussklappe (32) über den Gelenkmechanismus (38) gegenläufig oder gleichläufig zu den Klappen (11, 12) verstellbar ist.

10. Ventil nach einem der Ansprüche 5 bis 9, **dadurch gekennzeichnet, dass** die Verschlussklappe (32) an ihren seitlichen Längsrändern gebogene Randbereiche (33) aufweist.

11. Ventil nach Anspruch 10, **dadurch gekennzeichnet, dass** wenigstens einer der Randbereiche (33) in der Einströmstellung der Klappen (11, 12) an dem Rahmen (13) anliegt.

12. Ventil nach einem der vorhergehenden Ansprüche, **dadurch gekennzeichnet, dass** mindestens eine der Klappen (11, 12) bezüglich der Öffnung (15) verschiebbar gelagert ist.

13. Ventil nach Anspruch 12, **dadurch gekennzeichnet, dass** mindestens einer der Klappen (11, 12) ein Stellglied (24) zugeordnet ist, mit dem die mindestens eine Klappe (11, 12) verschiebbar ist.

14. Ventil nach einem der vorhergehenden Ansprüche, **dadurch gekennzeichnet, dass** die erste Klappe (11) einen abgewinkelten Bereich (19) aufweist.

15. Ventil nach einem der vorhergehenden Ansprüche, **dadurch gekennzeichnet, dass** mindestens eine der Klappen (11, 12) längenveränderlich ausgebildet ist.

16. Ventil nach einem der vorhergehenden Ansprüche, **dadurch gekennzeichnet, dass** die erste Klappe (11) einen Spoiler (25) aufweist, der bezüglich der ersten Klappe (11) mittels eines Stellglieds (26) verstellbar ist.

17. Ventil nach einem der vorhergehenden Ansprüche, **dadurch gekennzeichnet, dass** die erste Klappe (11) an einer Schwenkeinrichtung (28) angeordnet ist, die schwenkbeweglich in dem Rahmen (13) des Ventils (10) gelagert ist.

18. Ventil nach Anspruch 17, **dadurch gekennzeichnet, dass** die Schwenkeinrichtung (28) zwei an dem Rahmen (13) schwenkbeweglich gelagerte Tragarme (29) aufweist.

19. Ventil nach einem der vorhergehenden Ansprüche, **dadurch gekennzeichnet, dass** eine Stelleinrichtung (31) vorgesehen ist mit der die Klappen (11, 12) und/oder die Schwenkeinrichtung (28) in eine Ausström- und eine Einströmstellung verstellbar sind.

20. Ventil nach Anspruch 19, **dadurch gekennzeichnet, dass** über die Stelleinrichtung (31) die Klappen (11, 12) und/oder die Schwenkeinrichtung (28) gegenläufig und/oder gleichläufig verstellbar sind.

## Claims

1. A valve (10) for controlling the internal pressure pᵢ in a cabin of an aircraft, comprising a first flap (11) and a second flap (12), wherein the flaps (11, 12) control a pressure-changing fluid flow (L) between the environment and the cabin through an opening (15) in the valve (10), wherein a closure device is provided, in the inflow position of the flaps (11, 12) closing a portion between the first flap (11) and the second flap (12), **characterized in that** the closure device is configured as a controllable closure flap (21, 32).

2. The valve as claimed in claim 1, **characterized in that** the closure flap (21) is arranged in a pivotably movable manner on one of the flaps (11, 12).

3. The valve as claimed in the claims 1 or 2, **characterized in that** the closure flap (21) is arranged on the first flap (11).

4. The valve as claimed in one of the claims 3 to 5, **characterized in that** the closure flap (21) is connected to a controllable actuator (23).

5. The valve as claimed in claim 1, **characterized in that** the closure flap (32) is mounted in a pivotably movable manner on a frame (13) of the valve (10).

6. The valve as claimed in claim 5, **characterized in that** the closure flap (32), in the inflow position of the flaps (11, 12), bears against the top edges of the flaps (11, 12).

7. The valve as claimed in one of the claims 5 or 6, **characterized in that** the closure flap (32) is connected by a linkage mechanism (38) to the second flap (12) and the frame (13).

8. A flap as claimed in claim 7, **characterized in that** the linkage mechanism (38) comprises at least one rod (39) and coupling portions (40, 41), which latter are arranged on the second flap (12) and/or the frame (13).

9. A valve as claimed in one of the claims 7 or 8, **characterized in that** the closure flap (32) is adjustable via the linkage mechanism (38) in the opposite direction or the same direction to the flaps (11, 12).

10. A valve as claimed in one of the claims 5 to 9, **characterized in that** the closure flap (32) has on its lateral longitudinal margins curved marginal regions (33).

11. The valve is claimed in claim 10, **characterized in that** at least one of the marginal regions (33), in the inflow position of the flaps (11, 12), bears against the frame (13).

12. The valve as claimed in one of the preceding claims, **characterized in that** at least one of the flaps (11, 12) is mounted displaceably with respect to the opening (15).

13. The valve as claimed in claim 12, **characterized in that** to at least one of the flaps (11, 12) is assigned an actuator (24), with which the at least one flap (11, 12) is displaceable.

14. The valve is claimed in one of the preceding claims, **characterized in that** the first flap (11) has an angled-off region (19).

15. The valve as claimed in one of the preceding claims, **characterized in that** at least one of the flaps (11, 12) is configured such that it is variable in length.

16. The valve as claimed in one of the preceding claims, **characterized in that** the first flap (11) has a spoiler (25) which is adjustable with respect to the first flap (11) by means of an actuator (26).

17. The valve as claimed in one of the preceding claims, **characterized in that** the first flap (11) is arranged on a swivel mechanism (28) which is mounted in a pivotably movable manner in the frame (13) of the valve (10).

18. The valve as claimed in claim 17, **characterized in that** the swivel mechanism (28) has two supporting arms (29) mounted in a pivotably movable manner on the frame (13).

19. The valve as claimed in one of the preceding claims, **characterized in that** an actuating device (31), with which the flaps (11, 12) and/or the swivel mechanism (28) are adjustable into an outflow and an inflow position, is provided.

20. The valve as claimed in claim 19, **characterized in that** the flaps (11, 12) and/or the swivel mechanism (28) are adjustable in the opposite direction and/or in the same direction via the actuating device (31).

## Revendications

1. Vanne (10) pour la commande de la pression intérieure pᵢ dans une cabine d'un aéronef, comprenant un premier volet (11) et un second volet (12), dans laquelle les volets (11, 12) commandent un flux de fluide (L) qui modifie la pression, entre l'environnement et la cabine via une ouverture (15) de la vanne (10), dans laquelle il est prévu un moyen de fermeture qui, dans la position d'écoulement entrant des volets (11, 12), referme une zone entre le premier volet (11) et le second volet (12),
**caractérisée en ce que** le moyen de fermeture est réalisé sous la forme d'un volet de fermeture commandé (21, 32).

2. Vanne selon la revendication 1, **caractérisée en ce que** le volet de fermeture (21) est agencé avec possibilité de pivotement sur l'un des volets (11, 12).

3. Vanne selon la revendication 1 ou 2, **caractérisée en ce que** le volet de fermeture (21) est agencé sur le premier volet (11).

4. Vanne selon l'une des revendications 3 à 5, **caractérisée en ce que** le volet de fermeture (21) est relié à un organe de positionnement commandé (23).

5. Vanne selon la revendication 1, **caractérisée en ce que** le volet de fermeture (32) est monté en pivotement sur un cadre (13) de la vanne (10).

6. Vanne selon la revendication 5, **caractérisée en ce que**, dans la position pour l'écoulement entrant des volets (11, 12), le volet de fermeture (32) s'applique contre les arêtes supérieures, pénétrant dans l'espace intérieur de l'aéronef, des volets (11, 12).

7. Vanne selon l'une des revendications 5 ou 6, **caractérisée en ce que** le volet de fermeture (32) est relié via un mécanisme articulé (38) au second volet (12) et au cadre (13).

8. Vanne selon la revendication 7, **caractérisée en ce que** le mécanisme articulé (38) inclut au moins une barre (39) et des tronçons de couplage (40, 41) qui sont agencés sur le second volet (12) et/ou sur le cadre (13).

9. Vanne selon l'une des revendications 7 ou 8, **caractérisée en ce que** le volet de fermeture (32) est réglable, via le mécanisme articulé (38), en sens contraire ou dans le même sens que les volets (11, 12).

10. Vanne selon l'une des revendications 5 à 9, **caractérisée en ce que** le volet de fermeture (32) comporte des zones de bordure cintrées (33) au niveau de ses bordures longitudinales latérales.

11. Vanne selon la revendication 10, **caractérisée en ce que** l'une au moins des zones de bordures (33) s'applique contre le cadre (13) dans la position des volets (11, 12) permettant un écoulement entrant.

12. Vanne selon l'une des revendications précédentes, **caractérisée en ce que** l'un au moins des volets (11, 12) est monté avec possibilité de déplacement par rapport à l'ouverture (15).

13. Vanne selon la revendication 12, **caractérisée en ce qu'**un organe de positionnement (24) est associé à l'un au moins des volets (11, 12), au moyen duquel ledit au moins un volet (11, 12) est déplaçable.

14. Vanne selon l'une des revendications précédentes, **caractérisée en ce que** le premier volet (11) comprend une région (19) en angle.

15. Vanne selon l'une des revendications précédentes, **caractérisée en ce que** l'un au moins des volets (11, 12) est réalisé avec une longueur variable.

16. Vanne selon l'une des revendications précédentes, **caractérisée en ce que** le premier volet (11) comprend une pale aérodynamique (25) (spoiler), qui est réglable par rapport au premier volet (11) au moyen d'un organe de positionnement (26).

17. Vanne selon l'une des revendications précédentes, **caractérisée en ce que** le premier volet (11) est agencé sur un système à pivotement (28) qui est monté avec possibilité de pivotement dans le cadre (13) de la vanne (10).

18. Vanne selon la revendication 17, **caractérisée en ce que** le dispositif de pivotement (28) comprend deux bras porteurs (29) agencés avec possibilité de pivotement sur le cadre (13).

19. Vanne selon l'une des revendications précédentes, **caractérisée en ce qu'**il est prévu un dispositif de positionnement (31) au moyen duquel les volets (11, 12) et/ou le moyen de pivotement (28) peuvent être réglés jusque dans une position d'écoulement sortant et une position d'écoulement entrant.

20. Vanne selon la revendication 19, **caractérisée en ce que** les volets (11, 12) et/ou le dispositif de pivotement (28) sont réglables au moyen du dispositif de positionnement (31) en sens contraire et/ou dans le même sens.
